# EUROPEAN PATENT SPECIFICATION

(11) **EP 3 541 080 B1**
(45) Date of publication and mention of the grant of the patent: **03.08.2022**
(21) Application number: 18161948.7
(22) Date of filing: 15.03.2018
(51) Int. Cl.: H04N 21/44, H04N 21/434

(54) **METHOD FOR DETERMINING A NATIVE RESOLUTION OF A VIDEO CONTENT, METHOD FOR CREATING A LOOK-UP TABLE, DEVICE AND NON-VOLATILE DATA CARRIER**
METHODE ZUR BESTIMMUNG EINER URSPRÜNGLICHEN VIDEOAUFLÖSUNG, METHODE ZUR ERSTELLUNG EINER NACHSCHLAGETABELLE, GERÄT UND NICHT-FLÜCHTIGER DATENTRÄGER
PROCÉDÉ DE DÉTERMINATION D'UNE RÉSOLUTION NATIVE D'UN CONTENU VIDÉO, PROCÉDÉ DE CRÉATION D'UNE TABLE DE RECHERCHE, DISPOSITIF ET SUPPORT DE DONNÉES NON VOLATILE

(43) Date of publication of application: 18.09.2019
(73) Proprietor: Vestel Elektronik Sanayi ve Ticaret A.S., 45030 Manisa (TR)
(72) Inventor: KIRGIZ, Gamze, 45030 Manisa (TR); IKIZLER, Anil, 45030 Manisa (TR); EREN, Sibel, 45030 Manisa (TR)
(74) Representative: Kehl, Ascherl, Liebhoff & Ettmayr Patentanwälte Partnerschaft mbB

(56) References cited:
- WO-A1-2016/031912
- WO-A1-2016/210059
- US-A1- 2012 162 525
- WIEGAND T ET AL: "Rate-constrained coder control and comparison of video coding standards", IEEE TRANSACTIONS ON CIRCUITS AND SYSTEMS FOR VIDEO TECHNOLOGY, INSTITUTE OF ELECTRICAL AND ELECTRONICS ENGINEERS, USA, vol. 13, no. 7, 30 July 2003 (2003-07-30), pages 688-703, XP011099260, ISSN: 1051-8215, DOI: 10.1109/TCSVT.2003.815168

## Description

### TECHNICAL FIELD

The invention relates to a method for determining a native resolution of a video content, a device and a non-volatile data carrier.

### BACKGROUND

Although applicable to any video processing system, the present invention will mainly be described in conjunction with video reproduction systems.

In modern video reproduction systems the signal processing chain may comprise a plurality of different video processing elements. These different video processing elements usually may be parameterized according to the video content that is to be processed.

One of the possible parameters for parametrizing the different video processing elements is the resolution of the video content that is to be processed. Usually a resolution will be reported for the video content e.g. in the file header of a video file or in the metadata of a video stream or the like.

However, the reported resolution may deviate from the native resolution of the video content. For example, video content may be scaled up or down prior to embedding the video content in a file or in a stream. The reported resolution may for an up-scaled video e.g. be higher than the native resolution of the video.

Therefore, the different video processing elements may be parameterized according to a wrong or inaccurate resolution information.

Document "Rate-constrained coder control and comparison of video coding standards" by Wiegand T. et al. discloses a unified approach to the coder control of video coding standards such as MPEG-2, H.263, MPEG-4, and the draft video coding standard H264/AVC. Document WO 2016/210 059 A1 discloses a method for determining the native resolution of video data based on an analysis of the logarithmically scaled normalized magnitudes of a frame spectrum of color components associated with a frame.

There is a need for an improved method for determining a native resolution of video content.

### SUMMARY OF THE INVENTION

The above stated problem is solved by the features of the independent claims. Advantageous embodiments are defined in the dependent claims.

The present invention is based on the finding that video content in e.g. a file or a stream may comprise a native resolution that is different than the resolution that is indicated in the file or the stream for the video content.

The native resolution in this regard refers to the original resolution that the video content comprises. This original or native resolution may however be modified e.g. by up-scaling or down-scaling. For example a 720p video with a native resolution of 1280 × 720 pixels may be up-scaled and may be provided in a 1080p video file or stream with a resolution of 1920 × 1080.

However it may be beneficial in video processing applications to know the native resolution of a video content, e.g. to optimize the parameters in these video processing applications.

The present invention therefore provides the method for determining a native resolution of a video content.

The method tries to identify the native resolution of the video content by mapping a data rate of the video content and a codec that is used for encoding the video content to the native resolution of the video content.

The present invention uses the data rate as main parameter for determining the native resolution of video content, because the data rate strongly depends on the native resolution. This means that e.g. an up-scaled video content will still comprise a data rate that is similar to the un-scaled original content instead of a data rate that is similar to the data rate of a video with the up-scaled resolution as native resolution.

Further, the present invention takes the codec into account, since the codec also has a strong influence in the data rate of a video content. Different codecs may offer different levels of compression for the video content. Therefore knowing the codec is essential for mapping a data rate to a resolution. Possible codecs may include but are not limited to x264, x265, Xvid, FFmpeg, FFav , DivX, 3ivx, Sorenson Video, Sorenson Spark, VP3, VP4, VP5, VP6, VP7, libvpx (VP8), libvpx (VP9), Cinema Craft Encoder SP2, TrueMotion S, RealVideo, Huffyuv, and Lagarith.

It is further understood, the video content may be provided in any of a plurality of possible container formats, like e.g. 3GP, 3G2, Advanced Systems Format (.asf, .wma, .wmv), AVI, DivX Media Format (.divx), EVO, F4V (Flash Video), FLV (Flash Video), Matroska (.mkv, .mk3d, .mka, .mks, .webm), MCF, MP4, MPEG Video File (.mpg, .mpeg), MPEG program stream PS (.m2p, .ps), MPEG transport stream TS (.ts), BDAV MPEG-2 transport stream (.m2ts), MXF, Ogg QuickTime (.mov, .qt), RMVB, and VOB+IFO. The video content may also be provided e.g. as a stream.

It is therefore understood, that a device for determining the native resolution of a video content may be capable of reading at least one of the above container formats und at least one of the above codecs. Such a device may e.g. comprise a computer that executes computer readable instructions that cause a processor of the computer to perform the method of the present invention. It is understood, that such computer readable instructions may e.g. be provided as a computer program that may be executed by an operating system of the computer, or e.g. as a firmware of a dedicated computer device or a so called "embedded device". It is further understood, that such a device may also be capable of determining a look-up table and that respective computer readable instructions may be provided.

In order to allow a simple mapping of the a codec and a data rate to the native resolution of the video content, a look-up table is created for use in determining the native resolution of the video content.

To the end of creating a look-up table, multiple pieces of video content may be provided as base material or as input material. This input material may then be analyzed accordingly. The look-up table may e.g. be provided as a multi-dimensional look-up table. An exemplary look-up table may e.g. comprise two dimensions, one dimension for the codec and one dimension for the data rate. As will be seen below, more dimensions are possible. As alternative, multiple look-up tables may be provided, wherein a dedicated look-up table may e.g. be provided for every possible codec.

In the look-up table a native resolution is provided for every input pair of a codec and a data rate. For example, the look-up table may e.g. for the codec H264 and a data rate of 16 Mbps comprise the information that the native resolution is 1920 × 1080. In contrast, for the codec H264 and a data rate of 12 Mbps the look-up table may comprise the information that the native resolution is 1280 × 720.

This means that for example the video content may be provided in a container indicating a resolution of 1920 × 1080. However, it may be possible that the original video content was a 1280 × 720 video content and was up-scaled prior to embedding the video content in the container, e.g. a file or a stream. Such an up-scaled video content will then exhibit a data rate of about 12 Mbps instead of the expected 16 Mbps.

With the look-up table it therefore becomes easily possible to detect such an inconsistency.

Further embodiments of the present invention are subject of the further subclaims and of the following description, referring to the drawings.

The method comprises determining a reported resolution for the video content, wherein the native resolution of the video content may be determined based on the determined type of codec of the video content and the data rate of the video content and the determined reported resolution in the video content.

The reported resolution - as already indicated above - may refer to the resolution that is reported in a container or any other (meta-)data of the video content for the video content. It is understood, that the video content will usually be provided in the reported resolution. However, if the original or native resolution of the video content is a lower or higher resolution, this may e.g. have an impact in the data-rate of the video content.

For example a video content with a native resolution of 1920 × 1080 may comprise a data rate of 16 Mbps. However, if a video with a native resolution of 1280 × 720 is up-scaled and provided in a container with a resolution of 1920 × 1080, the data rate may be about 12 Mbps. In general, the lower the native resolution, the lower the data rate may be for a given reported resolution.

By taking into account the reported resolution, the mapping of the data rate and the codec to the native resolution may therefore be simplified.

In another embodiment, the method may comprise determining the video content to be an up-scaled video content if the determined native resolution is lower than the reported resolution. In addition or as alternative, the method may comprise determining the video content to be a down-scaled video content if the determined native resolution is higher than the reported resolution. Further, in addition or as alternative, the method may comprise determining the video content to be a non-scaled video content if the determined native resolution is equal to the reported resolution.

In the processing steps that follow the determination of the native resolution of the video content, it may be sufficient to know if the video content is an up-scaled video content, a down-scaled video content or a non-scaled video content.

As indicated above, it may be determined that a video content is an up-scaled video content if the native resolution is lower than the reported resolution. In contrast, a video content may be determined to be a down-scaled video content if the native resolution is determined to be higher than the reported resolution. Finally, if the native resolution matches the reported resolution, the video content may be determined to be a non-scaled video content.

In a further embodiment, the method may comprise determining a frames-per-second information for the video content, wherein the native resolution of the video content may in addition be determined based on the determined frames-per-second information for the video content.

The frames-per-second information refers to the number of single video frames, i.e. images, that the video content comprises per second. Such a frames-per-second information may e.g. indicate that 30 frames are provided per second in the video content. It is understood, that any other value is also possible.

It is obvious that a higher frame rate may result in a higher data rate. Therefore, the higher the frame rate, the higher the data rate will be, even if the video is an up-scaled video. Therefore, using the frames-per-second information as additional information in determining the native resolution will increase the accuracy of the resolution determination.

The method further comprises determining an amount of motion in the video content, wherein the native resolution of the video content is in addition determined based on the determined amount of motion in the video content.

Usually, when compressing videos, in consecutive frames the areas that change or move will be determined and will be separated from the background that does not move. The information about the moving areas may then be provided as motion vector. The motion vectors may then e.g. be used to inter predict an offset of a macro block between a key or reference frame and following frames. The video content may therefore e.g. comprise a plurality of key frames for predetermined time intervals and the intermediate frames may be calculated based at least in part on the motion vectors.

The amount of motion in the video will therefore strongly influence the data rate of the video, i.e. the more motion is present in a video, the higher the data rate will be. It may further be assumed that for a predetermined amount of motion, the influence on the data rate will be the same across different video content.

Therefore, using the amount of motion as additional information in determining the native resolution will increase the accuracy of the resolution determination. The amount of motion may e.g. be determined based on the number and/or length of the motion vectors. As alternative or in addition, the (reconstructed) images of the video content may be analyzed, e.g. the differences between directly consecutive images may be analyzed.

In a further embodiment, the native resolution of the video content may only be determined if no motion or motion below a predetermined threshold is detected in the video content.

If the amount of motion is taken into account when determining the native resolution of video content, the amount of influence of the motion on the data rate or the encoded video must be known at least for some determined amounts of motion in the video.

Therefore, by performing the native resolution determination only if the amount of motion is lower than a predetermined threshold or no motion is detected, it is not necessary to determine the influence that motion has on the data rate. Instead, the video content is only analyzed when no motion and therefore no motion-induced influence on the data rate is present.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a flow diagram of an embodiment of a method for determining a native resolution of a video content according to the present invention;
Fig. 2 shows a flow diagram of another embodiment of a method for determining a native resolution of a video content according to the present invention;
Fig. 3 shows a flow diagram of an exemplary method for creating a look-up table according to the present invention; and
Fig. 4 shows a block diagram of an embodiment of a device according to the present invention.

In the figures like reference signs denote like elements unless stated otherwise.

### DETAILED DESCRIPTION OF THE DRAWINGS

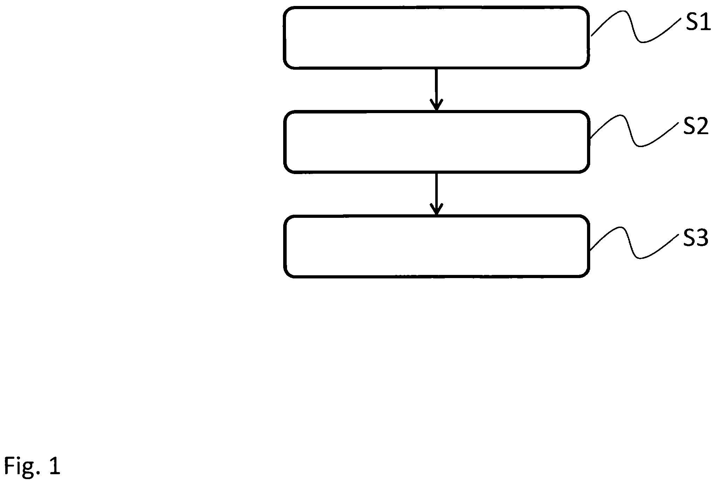

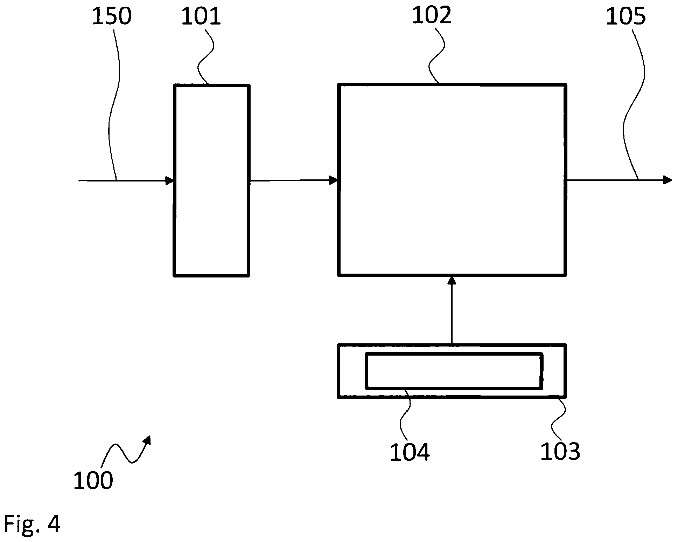

For sake of clarity in the following description of the method based Figs. 1 - 3 the reference signs used in the description of apparatus based Fig. 4 will be used.

Fig. 1 shows a flow diagram of a method for determining a native resolution 105 of a video content 150.

The method comprises determining S1 a type of codec used for the video content 150, determining S2 a data rate of the video content 150, and determining S3 the native resolution 105 of the video content 150 based on the determined type of codec of the video content 150 and the data rate of the video content 150.

Determining S1 the codec used for the video content 150 may e.g. comprise reading header data or metadata of a container of the video content 150, e.g. from a file or a stream. Such header data or metadata may e.g. comprise a marker or an indication of the codec that is used. Determining S2 the data rate of the video content 150 may e.g. also be performed by reading header data or metadata of the container of the video content 150. As alternative, the data rate may e.g. be measured. This is especially true for a stream, where the data rate may e.g. be measured by a network component of a device or an operating system that performs the method for determining a native resolution 105 of a video content 150.

Finally, when determining S3 the native resolution 105 of the video content 150, the determined codec may be used to e.g. select a list or table for data rate to resolution mapping. When the respective list or table is selected, the determined data rate may then be used to select from the table or list the respective native resolution 105.

It is understood, that interpolation may be used to reduce the memory that is required to store the data in the list or table. This means that for a given data rate the value of the native resolution 105 may e.g. be determined by interpolating between two values that are stored in the table or list.

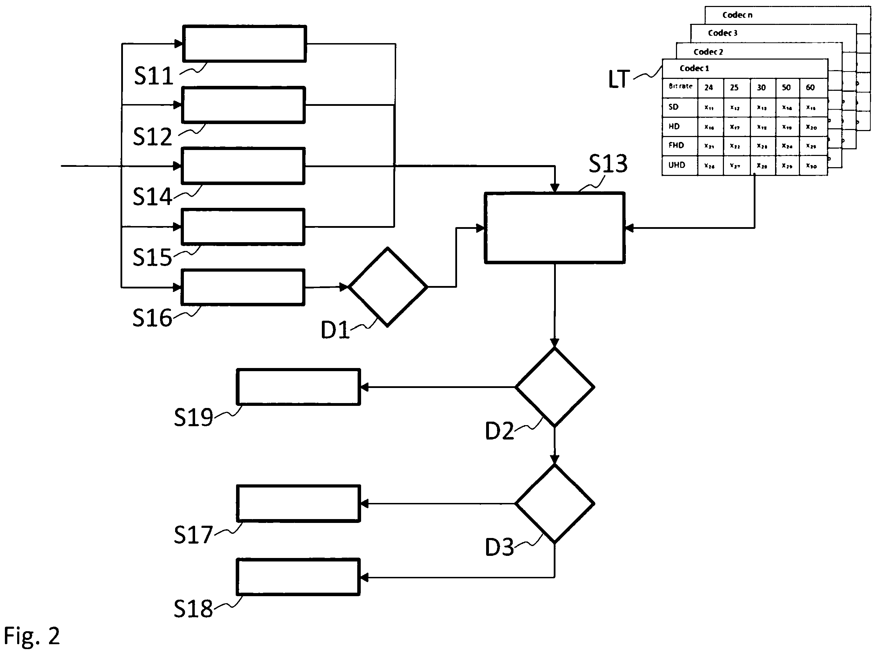

Fig. 2 shows another flow diagram of a method for determining a native resolution 105 of a video content 150.

The method comprises determining S11 a type of codec used for the video content 150, determining S12 a data rate of the video content 150, determining S14 a reported resolution for the video content 150, determining S15 a frames-per-second information for the video content 150, and determining S16 an amount of motion in the video content 150.

It is understood that the step of determining S15 a frames-per-second information for the video content 150 may be optional.

Depending on the performed steps, the native resolution 105 of the video content 150 is determined based on the determined type of codec of the video content 150, the data rate of the video content 150, based on the determined reported resolution in the video content 150, based on the determined amount of motion in the video content 150, and optionally based on the determined frames-per-second information for the video content 150..

The decision D1 may determine if the amount of motion is below a predetermined level. The output of decision D1 may then trigger determining S13 the native resolution 105.

Based on the determined codec, and or the determined data rate and/or the reported resolution and/or the frames-per-second information and/or the amount of motion the native resolution 105 may e.g. be selected from a look-up table LT.

The method further comprises determining S17 the video content 150 to be an up-scaled video content 150 if decision D3 results in that the determined native resolution 105 is lower than the reported resolution. The method further comprises determining S18 the video content 150 to be a down-scaled video content 150 if decision D3 results in that the determined native resolution 105 is higher than the reported resolution. Finally, the method comprises determining S19 the video content 150 to be a non-scaled video content 150 if decision D2 results in that the determined native resolution 105 is equal to the reported resolution.

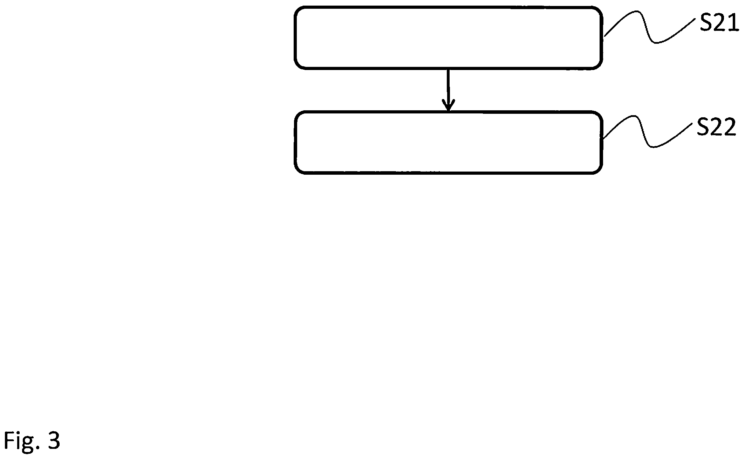

Fig. 3 shows a flow diagram of a method for creating a look-up table LT.

The method comprises determining S21 video information for different pieces of video content 150 with a known native resolution 105, and storing S22 the video information about the video content 150 together with the known native resolution 105 in the look-up table LT.

Determining video information may comprise determining a codec used for the different pieces of video content 150. The look-up table may therefore comprise a dimension that refers to the codec. Determining video information may comprise determining a data rate of the different pieces of video content 150. The look-up table may therefore comprise a dimension that refers to the data rate. Determining video information may comprise determining a reported resolution for the different pieces of video content 150. The look-up table may therefore comprise a dimension that refers to the reported resolution. Determining video information may comprise determining a frames-per-second information for the different pieces of video content 150. The look-up table may therefore comprise a dimension that refers to the frames-per-second information. Determining video information may comprise determining an amount of motion for the different pieces of video content 150. The look-up table may therefore comprise a dimension that refers to the amount of motion.

Fig. 4 shows a block diagram of a device 100 for determining the native resolution 105 of a video content 150.

The device 100 comprises a video content input interface 101 that is configured to receive the video content 150. Further, the device 100 comprises a determination unit 102 configured to determine the native resolution 105 of the received video content 150 by performing a method for determining a native resolution 105 of a video content 150 and/or configured to perform a method for creating a look-up table LT.

Further, the device 100 comprises a non-volatile data carrier 103, e.g. a memory, comprising computer readable instructions 104 that when executed by the determination unit 102 cause the determination unit 102 to perform a method for determining a native resolution 105 of a video content 150 and/or to perform a method for creating a look-up table LT.

### List of reference signs

- 100: device
- 101: video content input interface
- 102: determination unit
- 103: data carrier
- 104: computer readable instructions
- 105: native resolution

- 150: video content

- S1, S2, S3: method step
- S11, S12, S13, S14, S15: method step
- S16, S17, S18, S19: method step
- S21, S22: method step
- D1, D2, D3: decision

- LT: look-up table

## Claims

1. Computer implemented method for determining a native resolution (105) of a video content (150), the method comprising:
determining (S1, S11) a type of codec used for the video content (150),
determining (S2, S12) a data rate of the video content (150),
determining an amount of motion (S16) in the video content (150),
determining a reported resolution (S14) for the video content (150),
determining (S3, S13) the native resolution (105) of the video content (150) by selecting the native resolution (105) of the video content (150) from a look-up table (LT) based on the determined type of codec and the determined data rate and the determined amount of motion and the reported resolution, wherein the look-up table (LT) comprises native resolution (105) values for predetermined sets of at least a codec and data rate and an amount of motion information and reported resolution, and
wherein the native resolution refers to the original spatial resolution that the video content (150) comprises, and
wherein the reported resolution refers to the spatial resolution that is reported in a container or other data, especially metadata, of the video content (150) for the video content (150).

2. Computer implemented method according to claim 1, comprising determining (S17) the video content (150) to be an up-scaled video content (150) if the determined native resolution (105) is lower than the reported resolution, and/or
determining (S18) the video content (150) to be a down-scaled video content (150) if the determined native resolution (105) is higher than the reported resolution, and/or
determining (S19) the video content (150) to be a non-scaled video content (150) if the determined native resolution (105) is equal to the reported resolution.

3. Computer implemented method according to any one of the preceding claims, comprising determining a frames-per-second information (S15) for the video content (150), wherein the native resolution (105) of the video content (150) is in addition determined based on the determined frames-per-second information for the video content (150).

4. Computer implemented method according to claim 1, wherein the native resolution (105) of the video content (150) is only determined if no motion or motion below a predetermined threshold is detected in the video content (150).

5. Computer implemented method according to any one of the preceding claims, wherein in the look-up table (LT) the native resolution (105) values are further provided for frames-per-second information.

6. Device (100) for determining the native resolution (105) of a video content (150), the device (100) comprising:
a video content input interface (101) that is configured to receive the video content (150),
a determination unit (102) configured to determine the native resolution (105) of the received video content (150) by performing a computer implemented method according to any one of claims 1 to 5,
wherein the native resolution refers to the original spatial resolution that the video content (150) comprises.

7. Non-volatile data carrier (103) comprising computer readable instructions (104) that when executed by a processing device cause the processing device to perform a computer implemented method according to any one of claims 1 to 5.

## Patentansprüche

1. Computerimplementiertes Verfahren zur Bestimmung einer nativen Auflösung (105) eines Videoinhalts (150), wobei das Verfahren aufweist:
Bestimmen (S1, S11) eines Typs eines für den Videoinhalt (150) verwendeten Codecs,
Bestimmen (S2, S12) einer Datenrate des Videoinhalts (150),
Bestimmen einer Bewegungsmenge (S16) in dem Videoinhalt (150),
Bestimmen einer gemeldeten Auflösung (S14) für den Videoinhalt (150),
Bestimmen (S3, S13) der nativen Auflösung (105) des Videoinhalts (150) durch Auswählen der nativen Auflösung (105) des Videoinhalts (150) aus einer Nachschlagetabelle (LT) auf der Basis des bestimmten Codec-Typs und der bestimmten Datenrate und der bestimmten Bewegungsmenge und der gemeldeten Auflösung, wobei die Nachschlagetabelle (LT) Werte der nativen Auflösung (105) für vorbestimmte Sätze von mindestens einem Codec und einer Datenrate und einer Bewegungsmenge und der gemeldeten Auflösung aufweist, und
wobei sich die native Auflösung auf die ursprüngliche räumliche Auflösung bezieht, die der Videoinhalt (150) aufweist, und
wobei sich die gemeldete Auflösung auf die räumliche Auflösung bezieht, die in einem Container oder anderen Daten, insbesondere Metadaten, des Videoinhalts (150) für den Videoinhalt (150) gemeldet wird.

2. Computerimplementiertes Verfahren gemäß Anspruch 1, das aufweist:
Bestimmen (S17), dass es sich bei dem Videoinhalt (150) um einen hochskalierten Videoinhalt (150) handelt, wenn die ermittelte native Auflösung (105) niedriger ist als die gemeldete Auflösung, und/oder
Bestimmen (S18), dass der Videoinhalt (150) ein herunterskalierter Videoinhalt (150) ist, wenn die ermittelte native Auflösung (105) höher als die gemeldete Auflösung ist, und/oder
Bestimmen (S19), dass der Videoinhalt (150) ein nicht skalierter Videoinhalt (150) ist, wenn die ermittelte native Auflösung (105) gleich der gemeldeten Auflösung ist.

3. Computerimplementiertes Verfahren gemäß einem der vorhergehenden Ansprüche, das die Bestimmung einer Bild-pro-Sekunde-Information (S15) für den Videoinhalt (150) aufweist, wobei die native Auflösung (105) des Videoinhalts (150) zusätzlich auf der Basis der bestimmten Bild-pro-Sekunde-Information für den Videoinhalt (150) bestimmt wird.

4. Computerimplementiertes Verfahren gemäß Anspruch 1, wobei die native Auflösung (105) des Videoinhalts (150) nur dann bestimmt wird, wenn in dem Videoinhalt (150) keine Bewegung oder eine Bewegung unterhalb eines vorbestimmten Schwellenwerts erkannt wird.

5. Computerimplementiertes Verfahren gemäß einem der vorangehenden Ansprüche, wobei in der Nachschlagetabelle (LT) die Werte für die native Auflösung (105) ferner für die Bild-pro-Sekunde-Information bereitgestellt werden.

6. Vorrichtung (100) zur Bestimmung der nativen Auflösung (105) eines Videoinhalts (150), wobei die Vorrichtung (100) aufweist:
eine Eingabeschnittstelle für Videoinhalte (101), die so konfiguriert ist, dass sie die Videoinhalte (150) empfängt,
eine Bestimmungseinheit (102), die so konfiguriert ist, dass sie die native Auflösung (105) des empfangenen Videoinhalts (150) durch Ausführen eines computerimplementierten Verfahrens gemäß einem der Ansprüche 1 bis 5 bestimmt,
wobei sich die native Auflösung auf die ursprüngliche räumliche Auflösung bezieht, die der Videoinhalt (150) aufweist.

7. Nichtflüchtiger Datenträger (103), der computerlesbare Anweisungen (104) aufweist, die, wenn sie von einer Rechenvorrichtung ausgeführt werden, die Rechenvorrichtung veranlassen, ein computerimplementiertes Verfahren gemäß einem der Ansprüche 1 bis 5 durchzuführen.

## Revendications

1. Méthode mise en œuvre par ordinateur pour déterminer une résolution native (105) d'un contenu vidéo (150), la méthode comprenant :
déterminer (S1, S11) un type de codec utilisé pour le contenu vidéo (150),
déterminer (S2, S12) un débit de données du contenu vidéo (150),
déterminer une quantité de mouvement (S16) dans le contenu vidéo (150),
déterminer une résolution rapportée (S14) pour le contenu vidéo (150),
déterminer (S3, S13) la résolution native (105) du contenu vidéo (150) en sélectionnant la résolution native (105) du contenu vidéo (150) à partir d'une table de consultation (LT) sur la base du type déterminé de codec et du débit de données déterminé et de la quantité déterminée de mouvement et de la résolution rapportée, dans lequel la table de consultation (LT) comprend des valeurs de résolution native (105) pour des ensembles prédéterminés d'au moins un codec et un débit de données et une quantité d'informations de mouvement et une résolution rapportée, et
dans lequel la résolution native fait référence à la résolution spatiale originale que le contenu vidéo (150) comprend, et
dans lequel la résolution rapportée fait référence à la résolution spatiale qui est rapportée dans un conteneur ou d'autres données, en particulier des métadonnées, du contenu vidéo (150) pour le contenu vidéo (150).

2. Méthode mise en oeuvre par ordinateur selon la revendication 1, comprenant la détermination (S17) du contenu vidéo (150) comme étant un contenu vidéo à
échelle supérieure (150) si la résolution native déterminée (105) est inférieure à la résolution rapportée, et/ou
déterminer (S18) que le contenu vidéo (150) est un contenu vidéo à échelle réduite (150) si la résolution native déterminée (105) est supérieure à la résolution indiquée, et/ou
déterminer (S19) le contenu vidéo (150) comme étant un contenu vidéo non mis à l'échelle (150) si la résolution native déterminée (105) est égale à la résolution rapportée.

3. Méthode mise en œuvre par ordinateur selon l'une quelconque des revendications précédentes, comprenant la détermination d'une information d'images par seconde (S15) pour le contenu vidéo (150), dans laquelle la résolution native (105) du contenu vidéo (150) est en outre déterminée sur la base de l'information d'images par seconde déterminée pour le contenu vidéo (150).

4. Méthode mise en oeuvre par ordinateur selon la revendication 1, dans laquelle la résolution native (105) du contenu vidéo (150) est uniquement déterminée si aucun mouvement ou un mouvement inférieur à un seuil prédéterminé est détecté dans le contenu vidéo (150).

5. Méthode mise en œuvre par ordinateur selon l'une quelconque des revendications précédentes, dans laquelle, dans la table de consultation (LT), les valeurs de résolution native (105) sont en outre fournies pour des informations d'images par seconde.

6. Dispositif (100) pour déterminer la résolution native (105) d'un contenu vidéo (150), le dispositif (100) comprenant :
une interface d'entrée de contenu vidéo (101) qui est configurée pour recevoir le contenu vidéo (150),
une unité de détermination (102) configurée pour déterminer la résolution native (105) du contenu vidéo reçu (150) en exécutant une méthode mise en oeuvre par ordinateur selon l'une quelconque des revendications 1 à 5,
dans lequel la résolution native fait référence à la résolution spatiale originale que le contenu vidéo (150) comprend.

7. Support de données non volatile (103) comprenant des instructions lisibles par ordinateur (104) qui, lorsqu'elles sont exécutées par un dispositif de traitement, amènent le dispositif de traitement à exécuter une méthode mise en oeuvre par ordinateur selon l'une quelconque des revendications 1 à 5.
